# EUROPÄISCHE PATENTSCHRIFT

(11) **EP 0 706 078 B1**
(45) Veröffentlichungstag und Bekanntmachung des Hinweises auf die Patenterteilung: **15.11.2000**
(21) Anmeldenummer: 95112949.3
(22) Anmeldetag: 17.08.1995
(51) Int. Cl.: G03B 27/58, B26D 7/14

(54) **Einspannvorrichtung für Rollenmaterial**
Fixing device for wound material
Dispositif de fixation pour matériaux enroulés

(30) Priorität: 19.09.1994 IT BZ940056
(43) Veröffentlichungstag der Anmeldung: 10.04.1996
(73) Patentinhaber: DURST PHOTOTECHNIK A.G., 39042 Brixen (IT)
(72) Erfinder: Obertegger, Franz, I-39042 Brixen (IT); Gandini, Mario, I-39042 Brixen (IT); Profanter, Anton, I-39040 Villnöss (IT)
(74) Vertreter: Füchsle, Klaus, Dipl.-Ing.

(56) Entgegenhaltungen:
- EP-A- 0 082 474
- EP-A- 0 300 967
- EP-A- 0 379 344
- GB-A- 1 153 165
- US-A- 4 688 455
- US-A- 4 938 907
- PATENT ABSTRACTS OF JAPAN vol. 9 no. 139 (M-387) ,14.Juni 1985 & JP-A-60 019652 (FUJI XEROX K.K.) 31.Januar 1985,

## Beschreibung

Die vorliegende Erfindung betrifft eine Einspannvorrichtung für Rollenmaterial, insbesondere für Bildbelichtungsgeräte, nach dem oberbegriff des Anspruchs 1 (EP-A-0 082 474).

Das Einführen von Rollenmaterial in die Belichtungszone eines Belichtungsgerätes erfolgt üblicherweise durch Eintreiben des vorher rechtwinklig abgeschnittenen Rollenmaterials. Das exakte rechtwinklige Abschneiden des Materials und das gleichmäßige Spannen des Materials ist wichtig, damit bei einem späteren Belichten keine Fehler auftreten. Außerdem darf sich das Rollenmaterial bei einem Weitertransport nicht verkanten und auch keine Ungleichmäßigkeiten bilden. Sofern die erste einzuführende Kante des Rollenmaterials nicht exakt rechtwinklig abgeschnitten ist, kann es sowohl beim Spannen des Materials als auch beim späteren Weitertransport zu Wellenbildung und zu Verkantungen kommen, so daß nicht ordnungsgemäß belichtet werden kann und/oder das Rollenmaterial erneut eingespannt werden muß.

Aus der US-A-4 938 907 ist eine gattungsfremde Vorrichtung zum Schneiden von Kunststoffschläuchen bekannt, bei der zum Spannen der Kunststoffschläuche vor dem Schneiden eine Relativverschiebung der beiden Spannelemente erfolgen kann.

Aus der EP-A-0 300 967 ist eine Vorrichtung zur Herstellung von photographischen Kopien bekannt.

Es ist das der vorliegenden Erfindung zugrundeliegende technische Problem (Aufgabe), eine Vorrichtung für Rollenmaterial nach dem Oberbegriff des Anspruchs 1 zu schaffen, mit deren Hilfe dieses rechtwinklig zur Längserstreckung der Rollenbahn geschnitten werden kann und mit der gleichzeitig ein Einspannen des Rollenmaterials rechtwinklig zu dessen Achse und ohne Verkantungen und Wellenbildung möglich ist.

Die Lösung dieser Aufgabe erfolgt durch die Merkmale des Anspruchs 1.

Durch die erfindungsgemäße Einspannvorrichtung läßt sich das auf der Rollenhalterung gelagerte Rollenmaterial etwas abrollen und in die erste Klemmeinrichtung einklemmen. Anschließend kann das Rollenmaterial gespannt werden, so daß dieses zwischen der auf der Rollenhalterung gelagerten Rolle und der ersten Klemmeinrichtung ohne Wellenbildung unter Spannung steht. Anschließend kann die zweite Klemmeinrichtung betätigt werden, wodurch das Rollenmaterial zwischen dieser und der Rolle selbst gleichmäßig gespannt bleibt. Nach Betätigen der Schneideinrichtung verbleibt das gleichmäßig gespannte Rollenmaterial in der zweiten Klemmeinrichtung geklemmt und kann von dort aus in das Bildbelichtungsgerät eingeführt werden. Da das Rollenmaterial zu diesem Zeitpunkt unter einer gleichmäßigen Spannung senkrecht zur Längserstreckung der Rollenbahn geschnitten ist, wird bei Herausziehen des Rollenmaterials aus der zweiten Klemmeinrichtung in das Bildbelichtungsgerät die gleichmäßige Spannung beibehalten, und ein Weitertransport des Rollenmaterials führt nicht zu Verkantungen oder Wellenbildungen.

Da die erste Klemmeinrichtung beweglich gelagert ist, ergibt sich der große Vorteil, daß bei Spannen der Materialbahn zwischen erster Klemmeinrichtung und Rollenhalterung ein selbsttätiger Ausgleich der auftretenden Materialspannnungen erfolgt, so daß die Materialbahn sich von selbst gleichmäßig spannt. Da die erste Klemmeinrichtung auch federnd gelagert ist, erfolgt ein guter Ausgleich der im Material auftretenden Zug- und Schubspannungen.

Vorteilhafte Ausführungsformen der Erfindung sind durch die Unteransprüche gekennzeichnet.

Nach einer vorteilhaften Ausführungsform der Erfindung kann die federnde Lagerung der ersten Klemmeinrichtung entlang zweier nicht paralleler Achsen erfolgen. Diese Maßnahme verbessert wiederum das gleichmäßige Spannen der Materialbahn, da hierdurch die Materialbahn so gespannt werden kann, daß sich die auftretenden Unregelmäßigkeiten in der Bahn selbst entlang der zwei Achsen ausgleichen. Besonders gute Ergebnisse werden erzielt, wenn gemäß einer weiteren Ausbildung der Erfindung eine Achse senkrecht und die andere Achse parallel zur Bahn des Rollenmaterials angeordnet ist. Bei dieser Ausführungsform kann die Materialbahn einerseits in Richtung der Längserstreckung des Rollenmaterials gespannt werden, wobei jedoch gleichzeitig in der hierzu senkrechten Richtung ein Ausgleich erfolgt. Sofern das Rollenmaterial durch die erste Klemmeinrichtung festgeklemmt ist und anschließend gespannt wird, erfolgt hierbei selbsttätig eine vollkommen gleichmäßige Spannung der Materialbahn.

Diese Wirkung wird noch verbessert, wenn die erste Klemmeinrichtung auf die Mitte des Rollenmaterials wirkt. In diesem Fall wird der Anfang des Rollenmaterials sozusagen "punktförmig" eingespannt, so daß ein Auftreten von Ungleichmäßigkeiten gut vermieden ist.

Die erste Klemmeinrichtung kann eine Krokodilklemme sein, wodurch das Rollenmaterial während des Spannens gut festgehalten wird, jedoch nach Lösen der Krokodilklemme wieder vollständig freikommt.

Nach einer weiteren vorteilhaften Ausbildung der Erfindung wirkt die zweite Klemmeinrichtung auf im wesentlichen die gesamte Breite des Rollenmaterials. Durch diese Maßnahme wird das Rollenmaterial, nachdem es durch die erste Klemmeinrichtung gleichmäßig gespannt worden ist, mit dieser gleichmäßigen Spannung entlang der Bahnbreite fixiert, wodurch auch bei einem späteren Herausziehen des Materials in das Bildbelichtungsgerät die gleichmäßige Spannung beibehalten wird.

Um eine vereinfachte Verarbeitung zu erhalten, kann ein erster Sensor vorgesehen sein, der die erste Klemmeinrichtung dann aktiviert, wenn das Rollenmaterial diese erreicht hat. Hierdurch muß lediglich das Rollenmaterial in die Einspannvorrichtung eingeführt werden, woraufhin dann bei Erreichen des Sensors automatisch die erste Klemmeinrichtung betätigt wird. In ähnlicher Weise kann ein zweiter Sensor vorgesehen sein, der die zweite Klemmeinrichtung dann aktiviert, wenn die erste Klemmeinrichtung einen vorgegebenen Weg parallel zur Bahn des Rollenmaterials zurückgelegt hat. Hierdurch wird das Rollenmaterial automatisch durch die zweite Klemmeinrichtung in gleichmäßig gespanntem Zustand festgeklemmt, da bei Spannen des Rollenmaterials entgegen der Federkraft der ersten Klemmeinrichtung sich die gleichmäßige Materialspannung ohne Wellenbildung einstellt.

Sofern zwischen Schneideinrichtung und erster Klemmeinrichtung ein bewegbares Führungsblech vorgesehen ist, wird einerseits das Einführen der Materialbahn in die erste Klemmeinrichtung erleichtert, andererseits kann nach Betätigen der Schneideinrichtung der entstehende Materialrest aus der Vorrichtung problemlos entfernt werden.

Schließlich können die Rollenhalterung und die zweite Klemmeinrichtung an einem Revolvermagazin angeordnet sein. Hierdurch läßt sich das Rollenmaterial nach Betätigen der Schneideinrichtung mit Hilfe des Revolvermagazins weiterbewegen, um ein Einführen in beispielsweise ein Bildbelichtungsgerät zu ermöglichen. Gleichzeitig kann jede an dem Revolvermagazin vorgesehene Materialrolle in eine Ladeposition gebracht werden, in welcher das Einführen in die Einspannvorrichtung möglich ist.

Nachfolgend wird die vorliegende Erfindung rein beispielhaft anhand einer vorteilhaften Erfindung unter Bezugnahme auf die beigefügten Zeichnungen beschrieben. Es zeigen:
Fig. 1 eine schematische Seitenansicht der Einspannvorrichtung gemäß der Erfindung; und
Fig. 2 eine schematische Ansicht eines Teils der Einspannvorrichtung von Fig. 1.

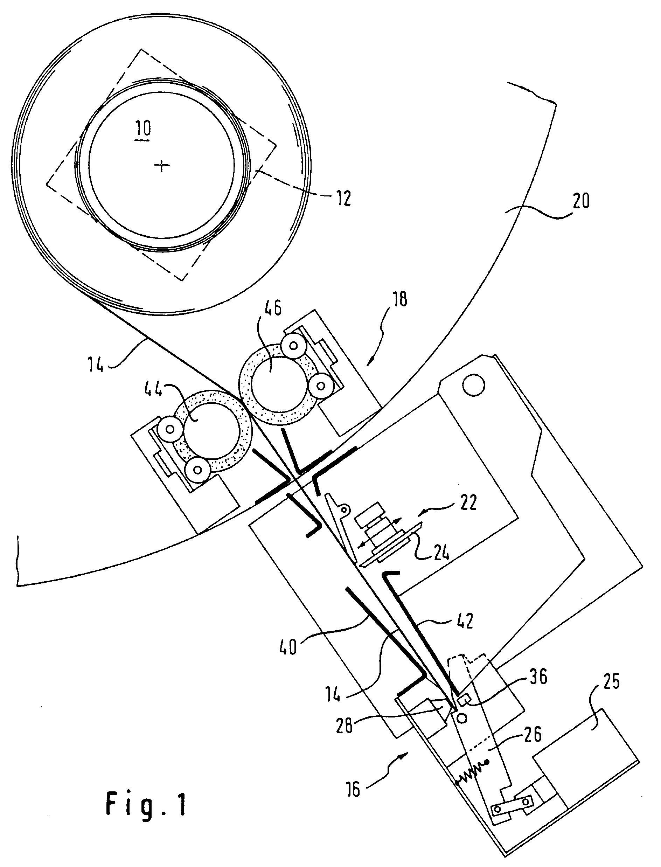

Die in Fig. 1 dargestellte Einspannvorrichtung für Rollenmaterial weist eine Rollenhalterung 10 für den Rollenkern 12 einer Materialbahn 14 auf. Die Rollenhalterung 10 ist mit einem Mechanismus versehen, der ein Spannen der Materialbahn 14 erlaubt, wenn das Ende der Bahn fixiert ist. Bei dem Material kann es sich beispielsweise um belichtungsfähiges Fotopapier handeln.

Ferner sind eine erste Klemmeinrichtung 16 und eine zweite Klemmeinrichtung 18 vorgesehen, wobei die zweite Klemmeinrichtung 18 zusammen mit der Rollenhalterung 10 an einem drehbaren Revolvermagazin 20 angeordnet ist. Die erste Klemmeinrichtung 16 ist ortsfest vorgesehen.

Zwischen der ersten Klemmeinrichtung und der zweiten Klemmeinrichtung ist eine Schneideinrichtung 22 angeordnet, deren Schneidmesser 24 genau rechtwinklig zur Längserstreckung der Papierbahn vorgesehen ist. Bei Betätigen des Schneidmessers 24 wird die Papierbahn 14 auf ihrer gesamten Breite durchtrennt.

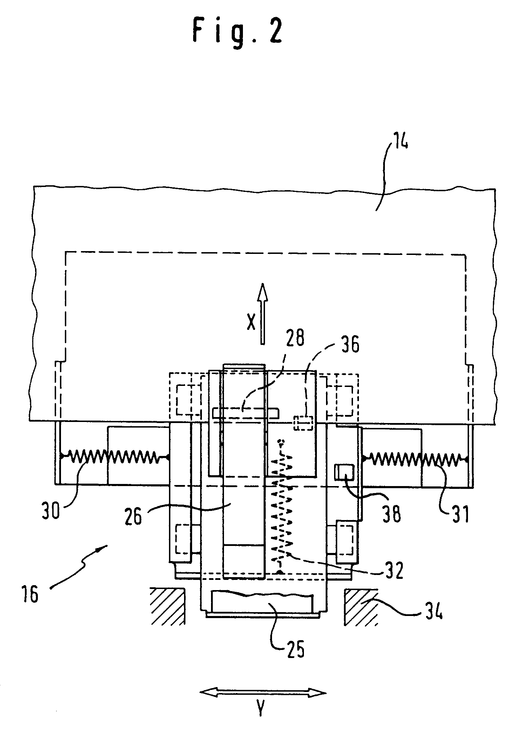

Wie insbesondere Fig. 2 schematisch zeigt, umfaßt die erste Klemmeinrichtung 16 einen über einen Magneten 25 oder eine andere steuerbare Klemmvorrichtung betätigbaren, gelenkig gelagerten Klemmhebel in Form einer Krokodilklemme 26, die gegen einen Amboß 28 drückt. Die erste Klemmeinrichtung 16 ist entlang zweier Achsen X und Y federnd gelagert, so daß diese entlang dieser Achsen gegen die Federkraft von Federn 30, 31 und 32 frei bewegbar ist. Hierbei wirkt die Krokodilklemme 26 der ersten Klemmeinrichtung 16 auf die Mitte des Rollenmaterials 14, wodurch verglichen zur Breite der Materialbahn ein "punktförmiger" Klemmbereich vorgesehen ist. Ferner ist ein Anschlag 34 vorgesehen, gegen den die Einheit aus Krokodilklemme 26, Amboß 28 sowie Betätigungsmagnet 25 anschlagen kann. Wie Fig. 2 zeigt, befindet sich die genannte Einheit auf einem Kreuzschlitten, der sowohl parallel wie auch senkrecht zur Papierbahn entlang der Achsen X und Y entgegen der Kraft der Federn 30, 31 und 32 bewegt werden kann. Die freie Bewegbarkeit ist dabei durch Kugellager-Lineareinheiten gewährleistet.

Aus seiner Mittenposition heraus kann der Kreuzschlitten in Richtung der Achse Y einen Hub von jeweils 25 mm zurücklegen.

Im Bereich der ersten Klemmeinrichtung 16 ist ein erster Sensor 36 vorgesehen, der die erste Klemmeinrichtung 16 dann aktiviert, wenn das Ende der Papierbahn 14 den Sensor 36 erreicht hat. Ein zweiter Sensor 38 in Form einer Gabellichtschranke aktiviert die erste Betätigungseinrichtung 18, wenn die erste Klemmeinrichtung 16 einen Hub von 7 mm in X-Richtung zurückgelegt hat, was einer Spannkraft von 25 N entspricht.

Wie Fig. 1 ferner zeigt, sind zwischen der Schneideinrichtung 22 und der ersten Klemmeinrichtung 16 zwei Führungsbleche 40, 42 vorgesehen, wobei das Führungsblech 42 schwenkbar gelagert ist und somit aufgeklappt werden kann, um einen abgeschnittenen Rest der Papierbahn 14 aus der Vorrichtung zu entfernen.

Die zweite Klemmeinrichtung 18, die an dem Revolvermagazin 20 angeordnet ist, besteht im wesentlichen aus einem Klemmrollenpaar 44, 46, das sich über die gesamte Breite der Papierbahn 14 erstreckt. Hierbei ist die Mantelfläche der Klemmrollen 44, 46 gummiert, wobei die Gummierung gestuft ausgebildet ist, wodurch sich ein gleichmäßiges Festklemmen ergibt.

Nachfolgend wird die Funktionsweise der erfindungsgemäßen Einspannvorrichtung beschrieben, wobei davon ausgegangen wird, daß auf der Rollenhalterung 10 eine Rolle einer Papierbahn 14 aus Fotopapier gelagert ist.

Zum Beginn des Einspannvorgangs muß des Revolvermagazin 20 in die Ladeposition gedreht werden, was durch entsprechende Kodierungen automatisch erfolgen kann. Anschließend wird die Papierbahn 14 manuell oder automatisch in die zweite Klemmeinrichtung 18 eingeführt, d.h. die Papierbahn 14 wird zwischen die Klemmrollen 44 und 46 geführt, die zu diesem Zeitpunkt noch keine Klemmkraft ausüben. Hierbei wird das Einführen durch Führungsbleche in der zweiten Klemmeinrichtung 18 erleichtert. Anschließend wird die Papierbahn 14 durch die Schneideinrichtung 22 zwischen den Führungsblechen 40, 42 in Richtung der ersten Klemmeinrichtung 16 bewegt. Sobald das Ende der Papierbahn 14 zwischen den Amboß 28 und die Krokodilklemme 26 bewegt worden ist, wird der Sensor 36 ausgelöst, der den Magneten 25 aktiviert, wodurch die Klemmeinrichtung 16 betätigt wird, d.h. sich die Krokodilklemme 26 schließt und die Papierbahn gegen den Amboß 28 drückt. Anschließend ist die Papierbahn im Bereich der Krokodilklemme 26 eingeklemmt und kann durch Drehen der Materialrolle auf dem Revolvermagazin 20 gespannt werden. Das Spannen kann manuell oder automatisch erfolgen.

Die Papierbahn 14 wird nun so lange gespannt, bis sich die erste Klemmeinrichtung 16 von dem Anschlag 34 um 7 mm wegbewegt hat, wodurch der zweite Sensor 38 betätigt wird. Hierdurch wirkt eine bestimmte, genau definierte Zugspannung auf die Papierbahn. In diesem Zustand ist die Papierbahn aufgrund der federnden Lagerung der Klemmeinrichtung 16 absolut gleichmäßig gespannt, ohne daß eine Wellenbildung oder Verkantung auftritt. Der zweite Sensor 38 aktiviert nun die zweite Klemmeinrichtung 18, d.h. die beiden Klemmrollen 44 und 46 werden betätigt, so daß die Papierbahn einerseits zwischen der ersten und zweiten Klemmeinrichtung, jedoch auch zwischen der Materialrolle und der zweiten Klemmeinrichtung 18 gleichmäßig gespannt ist. Durch anschließendes Betätigen der Schneideinrichtung 23 wird ein zur Längserstreckung der Papierbahn rechtwinklig verlaufender Schnitt durchgeführt, wodurch ein zur Rollenbahn rechtwinkliger Abwickelvorgang gewährleistet ist. Anschließend wird die vorstehende Papierbahn in das Revolvermagazin zurückgespult und dann kann das Revolvermagazin 20 gedreht werden, um die Materialbahn 14 in eine andere Position zu bringen, in welcher ein Einführen in ein Bildbelichtungsgerät möglich ist. Dort kann dann wiederum durch Klemmeinrichtungen oder Greifer die Papierbahn 14 aus der zweiten Klemmeinrichtung 18 herausgezogen werden. Da zu diesem Zeitpunkt die Papierbahn jedoch absolut gleichmäßig eingespannt ist, kann bei einer weiteren Verarbeitung der Bahn in dem Bildbelichtungsgerät kein Verkanten und auch keine Wellenbildung auftreten. Wenn die Papierbahn in das Bildbelichtungsgerät eingeführt wird, kann die Klemmkraft zwischen den Klemmrollen 44 und 46 geringfügig verringert werden. Anschließend kann durch das bewegliche Führungsblech 42 der abgeschnittene Papierrest aus der Vorrichtung entfernt werden.

## Patentansprüche

1. Einspannvorrichtung für Rollenmaterial, insbesondere für Bildbelichtungsgeräte, mit
- einer Rollenhalterung (10) zum Lagern einer Rolle von Rollenmaterial;
- einer ersten Klemmeinrichtung (16) zum Klemmen eines abgerollten Endes vom Rollenmaterial;
- einer zweiten Klemmeinrichtung (18) zum Klemmen des Rollenmaterials zwischen der Rollenhalterung und der ersten Klemmeinrichtung; und
- einer zwischen den Klemmeinrichtungen angeordneten Schneideinrichtung (22) zum rechtwinklichen Abschneiden des von der ersten und zweiten Klemmeinrichtung geklemmten und gespannten Rollenmaterials,
dadurch gekennzeichnet, daß
die erste Klemmeinrichtung (16) beweglich und federnd gelagert ist.

2. Vorrichtung nach Anspruch 1, dadurch gekennzeichnet, daß sich die erste Kleinmeinrichtung (16) selbsttätig mittig zum Rollenmaterial zentriert.

3. Vorrichtung nach Anspruch 1 oder 2, dadurch gekennzeichnet, daß die federnde Lagerung entlang zweier nicht paralleler Achsen (X, Y) erfolgt.

4. Vorrichtung nach Anspruch 3, dadurch gekennzeichnet, daß eine Achse (Y) senkrecht und die andere Achse (X) parallel zur Bahn (14) des Rollenmaterials angeordnet ist.

5. Vorrichtung nach zumindest einem der vorstehenden Ansprüche, dadurch gekennzeichnet, daß die erste Klemmeinrichtung (16) auf die Mitte des Rollenmaterials (14) wirkt.

6. Vorrichtung nach zumindest einem der vorstehenden Ansprüche, dadurch gekennzeichnet, daß die erste Klemmeinrichtung eine Krokodilklemme (26) aufweist.

7. Vorrichtung nach zumindest einem der vorstehenden Ansprüche, dadurch gekennzeichnet, daß die zweite Klemmeinrichtung (18) auf im wesentlichen die gesamte Breite des Rollenmaterials (14) wirkt.

8. Vorrichtung nach Anspruch 7, dadurch gekennzeichnet, daß die zweite Klemmeinrichtung ein Klemmrollenpaar (44, 46) ist.

9. Vorrichtung nach zumindest einem der vorstehenden Ansprüche, dadurch gekennzeichnet, daß ein erster Sensor (36) vorgesehen ist, der die erste Klemmeinrichtung dann aktiviert, wenn das Rollenmaterial diese erreicht hat.

10. Vorrichtung nach Anspruch 9, dadurch gekennzeichnet, daß ein zweiter Sensor (38) vorgesehen ist, der die zweite Klemmeinrichtung (18) dann aktiviert, wenn die erste Klemmeinrichtung (16) einen vorgegebenen Weg parallel zur Bahn des Rollenmaterials (14) zurückgelegt hat.

11. Vorrichtung nach zumindest einem der vorstehenden Ansprüche, dadurch gekennzeichnet, daß zwischen Schneideinrichtung (22) und erster Klemmeinrichtung (16) ein bewegbares Führungsblech (42) vorgesehen ist.

12. Vorrichtung nach zumindest einem der vorstehenden Ansprüche, dadurch gekennzeichnet, daß die Klemmeinrichtungen mittels Magneten (25) aktivierbar sind.

13. Vorrichtung nach zumindest einem der vorstehenden Ansprüche, dadurch gekennzeichnet, daß die Rollenhalterung (10) und die zweite Klemmeinrichtung (18) an einem Revolvermagazin (20) angeordnet sind.

## Claims

1. Mounting device for roll material, in particular for image exposure equipment, with
- a roll support (10) for mounting a roll of roll material;
- a first clamping device (16) for clamping an unrolled end of the roll material;
- a second clamping device (18) for clamping the roll material between the roll support and the first clamping device; and
- a cutting device (22) arranged between the clamping devices for cutting off at right angles the roll material clamped and held taut by the first and second clamping devices,
characterised in that the first clamping device (16) is movably spring-mounted.

2. Device according to claim 1, characterised in that the first clamping device (16) is automatically centred centrally to the roll material.

3. Device according to claim 1 or 2, characterised in that spring mounting is effected along two non-parallel axes (X, Y).

4. Device according to claim 3, characterised in that the one axis (Y) is arranged perpendicularly and the other axis (X) parallel to the path (14) of the roll material.

5. Device according to one or more of the preceding claims, characterised in that the first clamping device (16) acts on the centre of the roll material (14).

6. Device according to one or more of the preceding claims, characterised in that the first clamping device comprises a crocodile clip (26).

7. Device according to one or more of the preceding claims, characterised in that the second clamping device (18) acts on essentially the whole width of the roll material (14).

8. Device according to claim 7, characterised in that the second clamping device is a pair of clamping rollers (44, 46).

9. Device according to one or more of the preceding claims, characterised in that a first sensor (36) is provided, which activates the first clamping device when the roll material has reached the latter.

10. Device according to claim 9, characterised in that a second sensor (38) is provided, which activates the second clamping device (18) when the first clamping device (16) has covered a predetermined distance parallel to the path of the roll material (14).

11. Device according to one or more of the preceding claims, characterised in that between cutting device (22) and first clamping device (16) is provided a movable guide plate (42).

12. Device according to one or more of the preceding claims, characterised in that the clamping devices can be activated by means of magnets (25).

13. Device according to one or more of the preceding claims, characterised in that the roll support (10) and the second clamping device (18) are arranged on a turret magazine (20).

## Revendications

1. Dispositif de fixation pour matériau enroulé, en particulier pour des appareils d'exposition d'images à la lumière, avec
- avec une fixation de rouleau (10) pour le montage tournant d'un rouleau de matériau en rouleau,
- un premier dispositif de serrage (16), pour le serrage d'une extrémité déroulée de matériau en rouleau ;
- un deuxième dispositif de serrage (18), pour le serrage du matériau en rouleau entre la fixation de rouleau et le premier dispositif de serrage ; et
- un dispositif de découpage (22), disposé entre les dispositifs de serrage, pour découper à angles droits le matériau en rouleau, serré par le premier et le deuxième dispositif de serrage et tendu,
caractérisé en ce que le premier dispositif de serrage (16) est monté de façon mobile et élastiquement.

2. Dispositif selon la revendication 1, caractérisé en ce que le premier dispositif de serrage (16) se centre automatiquement centralement par rapport au matériau en rouleau.

3. Dispositif selon la revendication 1 ou 2, caractérisé en ce que le montage tournant, suspendu élastiquement, s'effectue le long de deux axes (X, Y) non parallèles.

4. Dispositif selon la revendication 3, caractérisé en ce qu'un premier axe (Y) est disposé perpendiculairement et l'autre axe (X) est disposé parallèlement à la bande (14) de matériau en rouleau.

5. Dispositif selon au moins l'une des revendications précédentes, caractérisé en ce que le premier dispositif de serrage (16) agit au centre du matériau en rouleau (14).

6. Dispositif selon au moins l'une des revendications précédentes, caractérisé en ce que le premier dispositif de serrage présente une pince crocodile (26).

7. Dispositif selon au moins l'une des revendications précédentes, caractérisé en ce que le deuxième dispositif de serrage (18) agit sur pratiquement toute la largeur du matériau en rouleau (14).

8. Dispositif selon la revendication 7, caractérisé en ce que le deuxième dispositif de serrage est constitué d'une paire de rouleaux de serrage (44, 46).

9. Dispositif selon au moins l'une des revendications précédentes, caractérisé en ce qu'est prévu un premier capteur (36), qui active le premier dispositif de serrage lorsque le matériau en rouleau a atteint celui-ci.

10. Dispositif selon la revendication 9, caractérisé en ce qu'est prévu un deuxième capteur (38), qui active le deuxième dispositif de serrage (18) lorsque le premier dispositif de serrage (16) a parcouru une distance prédéterminée, parallèlement à la bande de matériau en rouleau (14).

11. Dispositif selon au moins l'une des revendications précédentes, caractérisé en ce qu' une tôle de guidage (42) déplaçable est prévue entre le dispositif de découpage (22) et le premier dispositif de serrage (16).

12. Dispositif selon au moins l'une des revendications précédentes, caractérisé en ce que les dispositifs de serrage sont activables au moyen d'aimants (25).

13. Dispositif selon au moins l'une des revendications précédentes, caractérisé en ce que la fixation de rouleau (10) et le deuxième dispositif de serrage (18) sont disposés sur un magasin à revolver (20).
